# EUROPÄISCHE PATENTSCHRIFT

(11) **EP 1 380 375 B1**
(45) Veröffentlichungstag und Bekanntmachung des Hinweises auf die Patenterteilung: **27.07.2005**
(21) Anmeldenummer: 03013764.0
(22) Anmeldetag: 18.06.2003
(51) Int. Cl.: B23C 5/22

(54) **Tangential-Wendeschneidplatte**
Tangential indexable cutting insert
Plaquette de coupe indexable tangentielle

(30) Priorität: 11.07.2002 DE 10231339
(43) Veröffentlichungstag der Anmeldung: 14.01.2004
(73) Patentinhaber: Fette GmbH, 21493 Schwarzenbek (DE)
(72) Erfinder: Dehn, Gerhard, 23879 Mölln (DE); Engfer, Achim, 21445 Wulfsen (DE); Schunk, Uwe, 23554 Lübeck (DE); Zawidski, Gerhard, 21493 Schwarzenbek (DE)
(74) Vertreter: Patentanwälte Hauck, Graalfs, Wehnert, Döring, Siemons, Schildberg

(56) Entgegenhaltungen:
- EP-A- 0 769 341
- DE-A- 19 516 946
- FR-A- 2 364 724
- US-A- 3 490 117
- US-A- 4 294 566
- US-A- 4 697 963

## Beschreibung

Die Erfindung bezieht sich auf eine Tangential-Wendeschneidplatte nach dem Oberbegriff des Anspruchs 1.

Aus EP 0 769 341 A1 ist eine Wendeschneidplatte gemäß dem Oberbegriff des Anspruchs 1 bekannt geworden, bei der im Bereich ihrer beiden Seitenflächen und im Bereich ihrer beiden Endflächen zu jeder Deck- und Grundfläche hin eine Schneidkante ausgebildet ist. Sämtliche an die Seitenflächen und die Endflächen angrenzenden Schneidkanten haben gleiche Schneidgeometrie. In den Deck- und Grundflächen und entlang der beiden Seitenflächen und entlang der beiden Endflächen sind jeweils Spanmulden eingearbeitet. Die langen Schneidkanten weisen eine Bogenschliffkontur auf.

Aus DE 197 04 931 C1 ist eine Wendeschneidplatte mit einem im Wesentlichen kubischen Grundkörper bekannt geworden, die mit acht nutzbaren Schneidkanten ausgestattet ist. Sie weist zwei parallel zueinander angeordnete ebene und von einem Befestigungsloch durchdrungene größere Flächen und vier hieran jeweils angrenzende Seitenflächen auf, wobei die größeren Flächen über eine gerundete Kante in die kleineren Endflächen übergehen, sodass sich an der Längsseite etwa viertelkreisförmig ausgebildete Schneidkanten als Grenzlinien zu den Endflächen im Eckenbereich ergeben. Die langen Schneidkanten werden als Grenzlinien zwischen den größeren Flächen und der jeweils angrenzenden Längsfläche bogenförmig gekrümmt, sodass sich ein zur Längsmittel- und Quermittelebene spiegelsymmetrischer Körper ergibt. Derartige Wendeschneidplatten werden auf einem Fräskörper tangential angebracht.

Aus DE 299 12 025 ist ein Tangential-Schneideinsatz bekannt geworden mit einer wirksamen vorderen Fläche, oberen und unteren Hauptschneidkanten, Nebenseitenschneidkanten und dazwischen angeordneten Eckenschneidkanten. Sie weisen an der vorderen Fläche ausgebildete Spanflächen auf, die sich von ihren zugeordneten Schneidkanten bezüglich des Schneideinsatzes nach innen gerichtet erstrecken, wobei der Schneideinsatz eine imaginäre Bezugsebene aufweist, die durch Endpunkte seiner Eckenschneidkanten verläuft. Jede Hauptschneidkante erstreckt sich von ihren zugeordneten Eckenkanten bezüglich des Einsatzes nach innen und von der Bezugsebene weg.

Der Erfindung liegt die Aufgabe zugrunde, eine Tangential-Wendeschneidplatte zu schaffen, die achtfach eingesetzt werden kann.

Diese Aufgabe wird durch die Merkmale des Anspruchs 1 gelöst.

Die erfindungsgemäße Tangential-Wendeschneidplatte weist einen prismatischen Körper auf, der von zwei gegenüberliegenden identisch geformten ersten Flächen und vier identisch geformten dazwischen liegenden Seitenflächen begrenzt ist. Jede erste Fläche bildet mit den Seitenflächen vier gleich lange Hauptschneidkanten. Alle Hauptschneidkanten haben eine identische Geometrie. Die erfindungsgemäße Wendeschneidplatte weist außerdem einen erhabenen Steg mit planer Oberfläche auf, wobei die vier Stege symmetrisch zu einer Mittenebene angeordnet sind, welche durch die Seitenflächen verläuft. Bei einer Einspannung der erfindungsgemäßen Wendeschneidplatte mit Hilfe einer durch eine mittige Durchbohrung hindurchgehenden Spannschraube liegt eine Sitzfläche der ersten Fläche an einer Sitzfläche des Fräskörpers an, während mindestens ein Steg mit seiner Fläche an einer weiteren Sitzfläche anliegt. Mithin kann durch jeweils eine 90°-Drehung der erfindungsgemäßen Wendeschneidplatte jeweils eine Hauptschneidkante zum Einsatz gelangen. Durch eine 180°-Drehung der Wendeschneidplatte erfolgt dann die Auflage auf der anderen ersten Fläche, sodass wiederum durch 90°-Drehungen jeweils eine zugeordnete Schneidkante zum Einsatz kommen kann.

Die Spanflächen zu den Hauptschneiden sind in den Seitenflächen ausgebildet durch entsprechende Hohlkehlen beidseits des Steges. Die Freiflächen sind an den ersten Flächen gebildet in Form vom Kugelflächenabschnitten, die an die Hauptschneidkanten angrenzen.

Bei der erfindungsgemäßen tangentialen Wendeschneidplatte werden acht gleichwertige Schneiden erhalten. Sie ist gleichermaßen für Stahl und Gussmaterial verwendbar. Sie lässt sich problemlos mit positivem Spanwinkel fertigen.

Wie erwähnt, weisen die ersten Flächen, die einander gegenüberliegen, kugelige Gestalt auf. Nach einer Ausgestaltung der Erfindung sind indessen die an die Begrenzungsbohrung angrenzenden Ringflächenabschnitte der ersten Flächen planparallel. In diesem Bereich erfolgt die Anlage der Wendeschneidplatte an der Sitzfläche, in welche die Aufnahmebohrung für die Schraubbefestigung eingeformt ist.

Nach einer Ausgestaltung der Erfindung werden die Neben- oder Planschneiden durch Auskehlungen der Eckbereiche zwischen den Seitenflächen und einer Planfase am Ende der Hauptschneidkanten erzeugt. Nach einer weiteren Ausgestaltung der Erfindung ist die Planfase konkav gewölbt, d.h. mit einem Radius versehen. Eine derartige Planfase, die nach hinten wegläuft, ermöglicht ein weiches Eindringen in das Material. Die bogenförmige Schneide, welche sich aus der Oberflächenform der ersten beiden Flächen ergibt, ermöglicht ebenfalls einen weichen Schnitt.

Die Erfindung wird nachfolgend anhand eines Ausführungsbeispiels näher erläutert.
- Fig. 1: zeigt perspektivisch eine Tangential-Wendeschneidplatte nach der Erfindung.
- Fig. 2: zeigt eine Seitenansicht der Wendeschneidplatte nach Fig. 1.
- Fig. 3: zeigt die Draufsicht auf die Wendeschneidplatte nach Fig. 1.
- Fig. 4: zeigt vergrößert einen Schnitt durch die Wendeschneidplatte nach Fig. 3 entlang der Linie 4-4.
- Fig. 5: zeigt einen Fräskörper mit mehreren Wendeschneidplatten nach der Erfindung.
- Fig. 6: zeigt perspektivisch eine andere Ausführungsform einer Tangential-Wendeschneidplatte nach der Erfindung.
- Fig. 7: zeigt eine Seitenansicht der Wendeschneidplatte nach Fig. 6.
- Fig. 8: zeigt eine Draufsicht auf die Wendeschneidplatte nach Fig. 6.
- Fig. 9: zeigt vergrößert einen Schnitt durch die Wendeschneidplatte nach Fig. 7 entlang der Linie 9-9.

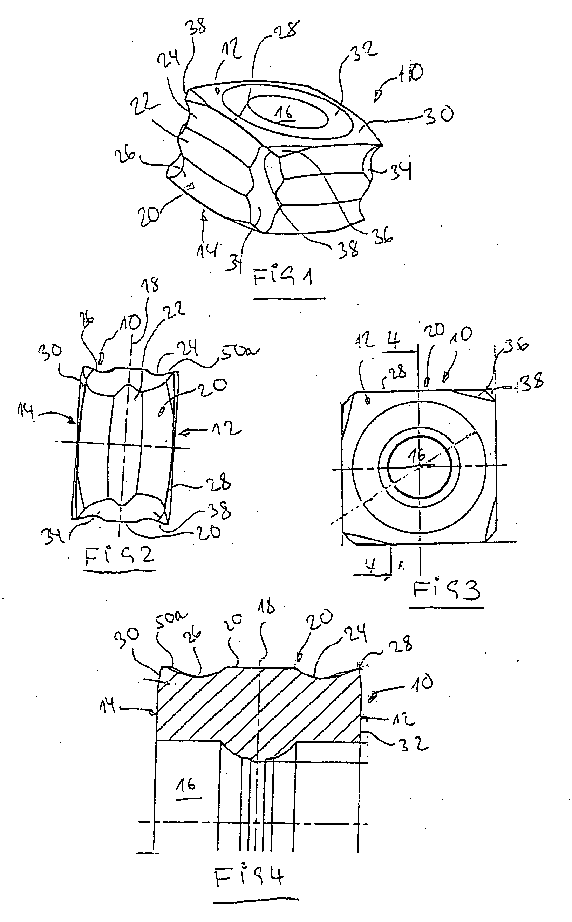

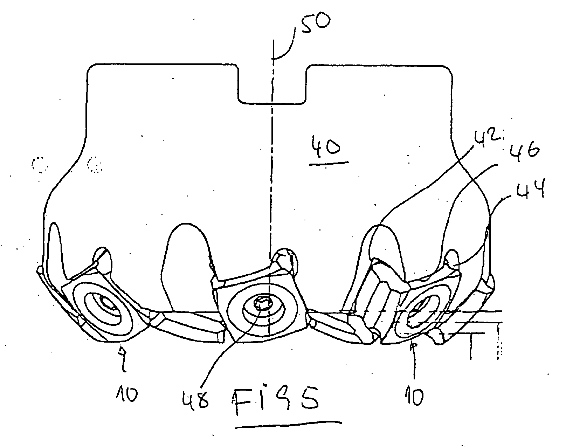

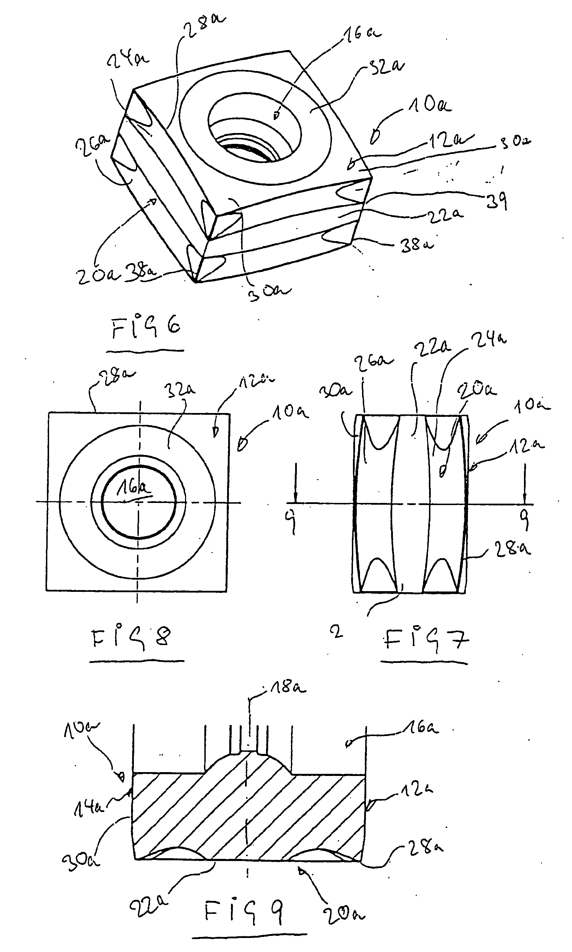

In den Figuren 1 bis 4 ist eine Tangential-Wendeschneidplatte 10 dargestellt. Sie weist gegenüberliegend erste Flächen 12, 14 auf, welche von einer Durchbohrung 16 durchstoßen sind. Wie aus Fig. 4 hervorgeht, ist die Durchbohrung 16 symmetrisch zu einer Mittenebene 18, die annähernd parallel zu den Seitenflächen 12, 14 verläuft. Zwischen den ersten Flächen 12, 14 befinden sich vier um annähernd 90° versetzt angeordnete Seitenflächen 20. Die Seitenflächen 20 werden gebildet durch einen mittigen erhabenen Steg 22 und Hohlkehlen 24, 26 auf beiden Seiten des Steges. Zwischen den Hohlkehlen 24, 26 und der zugeordneten ersten Fläche 12 bzw. 14 werden Hauptschneidkanten 28 geformt. Wie aus den Figuren 1 und 2 zu erkennen, sind die Hauptschneidkanten 28 in Draufsicht auf die ersten Flächen 12, 14 gerade, jedoch in der Seitenansicht bogenförmig gekrümmt. Diese Krümmung ergibt sich daraus, dass die ersten Flächen 12, 14 im angrenzenden Bereich zu den Hauptschneidkanten 28 Kugeloberflächenabschnitte 30 bilden. Die Durchbohrung 16 umgibt auf beiden ersten Flächen 12, 14 ein planer Ringflächenabschnitt 32, wobei die Ringflächenabschnitte 32 beider erster Flächen 12, 14 planparallel zueinander sind.

Wie aus den Figuren 2 bis 4 hervorgeht, sind die Stege 22, die eine plane Oberfläche aufweisen, symmetrisch zur Mittenebene 18. Dies trifft auch auf die Hohlkehlen 20 auf beiden Seiten des Steges 22 zu.

In den Eckbereichen der Seitenflächen 20 sind Auskehlungen 34 geformt, welche mit Planfasen 36 an den Enden der Schneidkanten 28 Neben- oder Planschneiden 38 formen. Die Planfasen 36 können mit einem Radius versehen sein, d.h. eine konvexe Wölbung aufweisen.

Wie erkennbar, lässt sich die gezeigte Wendeschneidplatte 10 in acht verschiedenen Positionen einsetzen, wobei jeweils eine Hauptschneide 28 und eine Nebenschneide 38 zum Einsatz gelangen.

Eine Einsatzmöglichkeit ist in Fig. 5 dargestellt, in der mehrere Wendeschneidplatten 10 an einem Trägerkörper 40 angebracht sind. Der Trägerkörper weist taschenförmige Aufnahmen für die Wendeschneidplatten 10 auf, die eine erste Sitzfläche 42 bilden und eine zweite Sitzfläche 44. An der Sitzfläche 42 kommt jeweils ein Ringflächenabschnitt 32 der ersten Flächen 12, 14 zur Anlage. An der zweiten Sitzfläche 44 kommt jeweils ein Steg mit seiner ebenen Fläche 22 zur Anlage. Eine dritte Sitzfläche 46 ermöglicht die Anlage eines zweiten Steges der Wendeschneidplatte. Die Befestigung erfolgt mit Hilfe einer Schraube 48, welche durch die Durchbohrung 16 der Wendeschneidplatte 10 geführt ist und in eine nicht gezeigte Gewindebohrung in der Sitzfläche 42 geschraubt wird.

Die Drehachse des Fräskörpers ist bei 50 dargestellt. In der gezeigten Darstellung dreht der Fräskörper 50 im Uhrzeigersinn. Die Wendeschneidplatten 10 sind in Tangentialanordnung und einer Anordnung im Winkel von 45° angebracht. Letzteres ist jedoch nicht Bedingung. Der Einstellwinkel κ kann in Grenzen beliebig gewählt werden.

Wie erkennbar, werden durch die Hohlkehlen 24, 26 Spanflächen 50a gebildet. Die Freiflächen werden von den Kugeloberflächenabschnitten 30 gebildet. Die Freifläche für die Planschneiden 38 werden von den Planfasen 36 gebildet. Die Hohlkehlen 24, 26 sind außerdem nicht gerade, sondern mit einem Radius versehen, sodass sie in Längsrichtung konkav geformt sind, d.h. in der Mitte ihrer tiefsten Stelle haben und zu den Enden etwas flacher werden.

In den Figuren 6 bis 9 ist eine Tangential-Wendeschneidplatte 10a dargestellt. Sie weist gegenüberliegend erste Flächen 12a, 14a auf, welche von einer Durchbohrung 16a durchstoßen sind. Wie aus Fig. 8 hervorgeht, ist die Durchbohrung 16a symmetrisch zu einer Mittenebene 18a, die annähernd parallel zu den Seitenflächen 12a, 14a verläuft. Zwischen den ersten Flächen 12a, 14a befinden sich vier um annähernd 90° versetzt angeordnete Seitenflächen 20a. Die Seitenflächen 20a werden gebildet durch einen mittigen erhabenen Steg 22a und Hohlkehlen 24a, 26a auf beiden Seiten des Steges. Zwischen den Hohlkehlen 24a, 26a und der zugeordneten ersten Fläche 12a bzw. 14a werden Hauptschneidkanten 28a geformt. Wie aus den Figuren 6 und 7 zu erkennen, sind die Hauptschneidkanten 28a in Draufsicht auf die ersten Flächen 12a, 14a gerade, jedoch in der Seitenansicht bogenförmig gekrümmt. Diese Krümmung ergibt sich daraus, dass die ersten Flächen 12a, 14a im angrenzenden Bereich zu den Hauptschneidkanten 28a Kugeloberflächenabschnitte 30a bilden. Die Durchbohrung 16a umgibt auf beiden ersten Flächen 12a, 14a ein planer Ringflächenabschnitt 32a, wobei die Ringflächenabschnitte 32a beider erster Flächen 12a, 14a planparallel sind.

Wie aus den Figuren 7 bis 9 hervorgeht, sind die Stege 22a, die eine plane Oberfläche aufweisen, symmetrisch zur Mittenebene 18a. Dies trifft auch auf die Hohlkehlen 20a auf beiden Seiten des Steges 22a zu. Die Hohlkehlen 20a laufen über Flächenabschnitte 27 in die Kante 39 ein. Die Flächenabschnitte sind plan gezeigt, müssen es aber nicht sein.

Wie erkennbar, lässt sich die gezeigte Wendeschneidplatte 10a in acht verschiedenen Positionen einsetzen, wobei jeweils eine Hauptschneide 28a und eine Nebenschneide 38a zum Einsatz gelangen.

Die Einsatzmöglichkeit ist ähnlich wie in Fig. 5 dargestellt, indem mehrere Wendeschneidplatten 10a an einem Trägerkörper angebracht sind. Allerdings werden die Platten 10a für den Tagentialfräskopf in 90°-Anordnung verwendet, während bei der Ausführungsform nach Fign. 1 bis 5 eine 45°-Anordnung vorgesehen ist. Der Trägerkörper weist taschenförmige Aufnahmen für die Wendeschneidplatten 10a auf, die eine erste Sitzfläche bilden und eine zweite Sitzfläche. An der ersten Sitzfläche kommt jeweils ein Ringflächenabschnitt 32a der ersten Flächen 12a, 14a zur Anlage. An der zweiten Sitzfläche kommt jeweils ein Steg 22a mit seiner ebenen Fläche zur Anlage. Eine dritte Sitzfläche ermöglicht die Anlage eines zweiten Steges der Wendeschneidplatte. Die Befestigung erfolgt mit Hilfe einer Schraube, welche durch die Durchbohrung 16a der Wendeschneidplatte 10a geführt ist und in eine nicht gezeigte Gewindebohrung in der ersten Sitzfläche geschraubt wird.

Die Wendeschneidplatte kann für beide Drehrichtungen des Fräskörpers eingesetzt werden. Der Einstellwinkel κ kann in Grenzen beliebig gewählt werden.

Wie erkennbar, werden durch die Hohlkehlen 24a, 26a Spanflächen gebildet. Die Freiflächen werden von den Kugeloberflächenabschnitten 30a gebildet. Die Freifläche für die Planschneiden 38a werden von den Planfasen gebildet. Man erkennt, dass an den Ecken der Schneidplatte 10a im Wesentlichen gerade Kanten 39 vorgesehen sind, die annähernd senkrecht auf der Ebene der Flächen 32a stehen und deren zu den Ecken hin liegende Abschnitte die Planschneiden 38a bilden. Die Hohlkehlen 24a, 26a sind in Längsrichtung nicht gerade, sondern mit einem Radius versehen, sodass sie in Längsrichtung konkav geformt sind, d.h. in der Mitte ihrer tiefsten Stelle haben und zu den Enden etwas flacher werden.

## Patentansprüche

1. Tangential-Wendeschneidplatte mit
- einem prismatischen Körper, der von zwei gegenüberliegenden identisch geformten ersten Flächen (12, 14; 12a, 14a) und vier dazwischenliegenden Seitenflächen (20; 20a) begrenzt ist und
- einer Befestigungsdurchbohrung (16; 16a),
**dadurch gekennzeichnet, dass** die Seitenflächen identisch geformt sind, dass die Befestigungsdurchbohrung (16; 16a) koaxial zur Achse durch die Mitten der ersten Flächen (12, 14; 12a, 14a) ist, und dass die Tangential- Wendeschneidplatte außerdem folgende Merkmale aufweist :
- vier gleich lange Hauptschneidkanten (28; 28a) je erster Fläche (12, 14; 12a, 14a), die mit jeweils einer Seitenfläche (20; 20a) gebildet sind
- einen erhabenen Steg (22; 22a) je Seitenfläche (20; 20a), wobei die vier Stege symmetrisch zu einer Mittenebene (18; 18a) durch die Seitenflächen (20) sind
- Spanflächen an den Seitenflächen (20), die angrenzend an die Hauptschneiden (28; 28a) durch Hohlkehlen (24, 26; 24a, 26a) beidseits des zugeordneten Steges (22; 22a) gebildet sind und
- Freiflächen an den ersten Flächen (12, 14; 12a, 14a), die durch eine Kugelflächenform (30; 30a) der ersten Flächen (12, 14; 12a, 14a) angrenzend an die Hauptschneidkanten (28; 28a) gebildet sind.

2. Wendeschneidplatte nach Anspruch 2, **dadurch gekennzeichnet, dass** an die Befestigungsbohrung (16; 16a) angrenzende Ringflächenabschnitte (32; 32a) der ersten Flächen (12, 14; 12a, 14a) planparallel sind.

3. Wendeschneidplatte nach Anspruch 1 oder 2, **dadurch gekennzeichnet, dass** durch Auskehlungen (34; 34a) der Eckbereiche zwischen den Seitenflächen (20; 20a) und Planfasen (36; 36a) am Ende der Hauptschneidkanten (28; 28a) Nebenschneidkanten oder Planschneiden (38; 38a) geformt sind.

4. Wendeschneidplatte nach Anspruch 3, **dadurch gekennzeichnet, dass** die Planfase (36; 36a) konvex gewölbt ist.

5. Wendeschneidplatte nach einem der Ansprüche 1 bis 5, **dadurch gekennzeichnet, dass** die Hohlkehle (24, 26; 24a, 26a) in Längsrichtung konkav geformt ist.

## Claims

1. A tangential reversible cutting blade, comprising:
- a prismatic body which is bordered by two opposed, identically shaped first surfaces (12, 14, 12a, 14a) and four, interposed lateral surfaces (20, 20a),
- a mounting bore (16, 16a)
**characterized in that** the lateral surfaces are identically formed
- **in that** mounting bore (16, 16a) is coaxial with the axis through the centres of the first surfaces (12, 14, 12a, 14a) and that the tangential reversible cutting blade has the following features:
- four equal-length main cutting edges (28, 28a) on each of the first surface (12, 14, 12a, 14a) which are defined with one lateral face (20, 20a) each,
- a raised web (22, 22a) on each lateral surface (20, 20a) with the four webs being symmetrical with a central plane (18, 18a) through the lateral surfaces (20, 20a),
- metal-cutting faces on the lateral surfaces (20, 20a) which are defined by fillets (24, 26, 24a, 26a) adjacent to the main cutting edges (28, 28a) on either side of the associated web (22, 22a), and
- cutting-tool flanks on the first surfaces (12, 14, 12a, 14a) which are defined by a spherical surface shape (30, 30a) of the first surfaces (12, 14, 12a, 14a) adjacent to the main cutting edges (28, 28a).

2. The reversible cutting blade as claimed in claim 1, **characterized in that** annular area portions (32, 32a) of the first surfaces (12, 14, 12a, 14a) that adjoin the mounting bore (16) are plane-parallel.

3. The reversible cutting blade as claimed in claim 1 or 2, **characterized in that** secondary cutting edges or wiper edges (38, 38a) are formed by fillets (34, 34a) of the corner areas between the lateral surfaces (20, 20a) and plane chamfers (36, 36a) at the end of the main cutting edges (28, 28a).

4. The reversible cutting blade as claimed in claim 3, **characterized in that** the plane chamfer (36, 36a) is bulged in a convex fashion.

5. The reversible cutting blade as claimed in any one of claims 1 to 4, **characterized in that** the fillet (24, 26, 24a, 26a) is of a concave shape longitudinally.

## Revendications

1. Plaquette de coupe amovible tangentielle, comprenant
- un corps prismatique délimité par deux premières faces opposées (12, 14; 12a, 14a) de forme identique et quatre faces latérales intermédiaires (20; 20a), et
- un alésage de fixation (16; 16a),
**caractérisée en ce que** les faces latérales ont une forme identique, que l'alésage de fixation (16; 16a) est coaxial par rapport à l'axe passant par le centre des premières faces (12, 14; 12a, 14a), et que la plaquette de coupe amovible tangentielle présente encore les caractéristiques suivantes :
- quatre arêtes de coupe de longueur identique (28; 28a) pour chaque première face (12, 14; 12a, 14a) qui sont formées conjointement avec une face latérale respective (20; 20a);
- une entretoise convexe (22; 22a) pour chaque face latérale (20; 20a), les quatre entretoises étant symétriques par rapport à un plan central (18; 18a) traversant les faces latérales (20);
- des faces de coupe sur les faces latérales (20), adjacentes aux arêtes de coupe principales (28; 28a), formées par des gorges creuses (24, 26; 24a, 26a) des deux côtés de l'entretoise associée (22; 22a), et
- des faces de dépouille sur les premières faces (12, 14; 12a, 14a), adjacentes aux arêtes de coupe principales (28; 28a), formées par une forme de surface sphérique (30; 30a) des premières faces.

2. Plaquette de coupe amovible tangentielle selon la revendication 1, **caractérisée en ce que** des parties de surfaces annulaires (32; 32a) des premières faces (12, 14; 12a, 14a) attenant à l'alésage de fixation (16; 16a) sont planes et parallèles.

3. Plaquette de coupe amovible tangentielle selon la revendication 1 ou 2, **caractérisée en ce que** des arêtes de coupe secondaires ou des chanfreins plans (36; 36a) sont formées par une gorge (34; 34a) des parties cornières entre les faces latérales (20; 20a) et des arêtes de planage (38; 38a) à l'extrémité des arêtes de coupe principales (28; 28a).

4. Plaquette de coupe amovible tangentielle selon la revendication 3, **caractérisée en ce que** le chanfrein plan (36; 36a) est convexe.

5. Plaquette de coupe amovible tangentielle selon l'une des revendications 1 à 4, **caractérisée en ce que** les gorges (24, 26; 24a, 26a) présentent une forme concave dans la direction longitudinale.
